# EUROPÄISCHE PATENTSCHRIFT

(11) **EP 3 578 400 B1**
(45) Veröffentlichungstag und Bekanntmachung des Hinweises auf die Patenterteilung: **15.07.2020**
(21) Anmeldenummer: 18175893.9
(22) Anmeldetag: 05.06.2018
(51) Int. Cl.: B60J 5/04

(54) **ABDECKELEMENT**
COVER ELEMENT
ÉLÉMENT DE RECOUVREMENT

(43) Veröffentlichungstag der Anmeldung: 11.12.2019
(73) Patentinhaber: Wirthwein AG, 97993 Creglingen (DE)
(72) Erfinder: Schmuttermair, Stefan, 86853 Langerringen (DE); Eisen, Harald, 97346 Iphofen (DE)
(74) Vertreter: Stippl, Hubert

(56) Entgegenhaltungen:
- EP-A1- 3 118 064
- JP-A- 2003 335 134
- JP-A- 2009 137 317
- US-A1- 2017 113 521

## Beschreibung

Die vorliegende Erfindung betrifft ein Abdeckelement zum Abdecken von Innenflächenbereichen von Fahrzeugkarosserie z. B. der Innenseite der Tür bzw. des Türblechs, wie z.B. in US 2017/113521 A1 offenbart. Abdeckelemente können z. B. sogenannte Akustikdeckel, Aggregatträger (AGT) oder Zwischenelemente sein. Derartige Abdeckelemente decken einen Innenbereich einer Fahrzeugkarosserie ab und müssen deshalb dazu hergerichtet sein, eine Nass-Trockenbereichstrennung zu bilden. Ferner dienen die Abdeckelemente zur Vermeidung bzw. Reduzierung einer Innengeräuschbildung. Akustikdeckel werden im Bereich der Innenseite einer Fahrzeugtür montiert und gewährleisten in diesem Bereich eine Nass-Trockenbereichstrennung.

Zur Gewährleistung einer Nass-Trockenbereichstrennung werden Abdeckelemente dichtend befestigt. Die Dichtfunktion wird durch ein am Abdeckelement vorgesehenes vorzugsweise umlaufendes Dichtelement gewährleistet. Hierzu kann beispielsweise ein umlaufender vorgefertigter Dichtring in eine entsprechende Nut des Abdeckelements eingelegt werden. Je nach den konstruktiven Gegebenheiten kann es vorkommen, dass eine Kabelstrang seitlich in den Bereich des Abdeckelements eingeführt werden muss, mit der Folge, dass am Randbereich des Abdeckelements im Bereich der Dichtung eine Kabeldurchführung vorgenommen werden muss. Ist eine Dichtigkeit in diesem Bereich nicht sicher gewährleistet, kann Wasserdampf, Feuchtigkeit bzw. Nässe in das Innere des Abdeckelements eindringen und dort zu einer Schädigung der elektrischen oder elektronischen Bauteilen führen. Dies stellt eine Problemzone dar, bei der es unter bestimmten Umständen zu Undichtigkeiten kommen kann.

### Aufgabe der vorliegenden Erfindung

Die Aufgabe der vorliegenden Erfindung besteht darin, ein Abdeckelement zur Verfügung zu stellen, welches eine verbesserte Dichtwirkung im Bereich einer Kabeldurchführung gewährleistet.

### Lösung der Aufgabe

Die vorstehende Aufgabe wird durch die Merkmale des Anspruchs 1 gelöst. Zweckmäßige Ausgestaltungen der Erfindung sind in den Unteransprüchen beansprucht.

Erfindungsgemäß ist in der länglichen Nut eine Schaumkonturraupe vorgesehen. Eine Schaumkonturraupe ist ein schaumartiges Dichtungsmaterial, welches in noch fließfähigem Zustand entlang des Verlaufs der Nut sukzessive in Letztere eingebracht wird und dort aushärtet. Durch die Verwendung einer Schaumkonturraupe wird der Vorteil geschaffen, dass das erfindungsgemäße Abdeckelement bereits als vorkonfektioniertes Kombinationselement (Abdeckung und Dichtung) konzipiert und zugeliefert werden kann. Die Dichtungen müssen daher nicht mehr beim PKW-Hersteller montiert werden bzw. erst separat bereitgestellt werden. Produktionskosten bei der PKW-Herstellung können hierdurch minimiert werden. Mindestens ein im Bereich der Ausbauchung der Nut vorgesehener Formvorsprung dient dazu, die Schaumkonturraupe im Bereich der Ausbauchung für eine Kabeldurchführung zu verdicken bzw. zu verändern und so die Dichtigkeit des Abdeckelements im Bereich der Kabeldurchführung zu optimieren. Der Formvorsprung gewährleistet damit eine verbesserte Ausprägung der Schaumkonturraupe im Bereich der Kabeldurchführung und als Folge davon einen verbesserten Abschluss des Inneren des vom Abdeckelement abzudeckenden Bereichs. Vorzugsweise sind mehrere Formvorsprünge vorgesehen.

Zweckmäßigerweise ist der Formvorsprung derart geformt und/oder orientiert, dass das Fließen von flüssigem, zähflüssigem oder viskosem Schaum während des (in der Regel automatisierten) Auftrags entlang der Nut verzögert wird. Hierdurch werden schwerkraftbedingte Dickenunterschiede der sich beim Aufbringen bildenden Schaumkonturraupe vermieden und/oder besondere Bereiche gebildet, die eine im Vergleich zum restlichen Verlauf der Schaumkonturraupe veränderten z. B. verdickten Bereich begründen.

Dadurch, dass sich der Formvorsprung lediglich im Flankenbereich der Nut befindet, wohingegen im Bodenbereich der Nut keine Vorsprünge vorgesehen sind, wird im Flankenbereich der Nut vermehrt Schaum der Schaumkonturraupe aufgestaut. Hierdurch kann sich eine Verdickung der Schaumkonturraupe im jeweiligen Flankenbereich der Nut ausbilden, die zu einer verbesserten Abdichtung des seitlichen Bereichs der Schaumkonturraupe hin zu dem einlaufenden Kabelstrang führt.

Zweckmäßigerweise sind mehrere Formvorsprünge in Längsrichtung der Nut betrachtet hintereinander angeordnet. Hierdurch kann die Ausbildung der Form der Schaumkonturraupe

Die Anzahl der Formvorsprünge im jeweiligen Flankenbereich kann entweder identisch oder auch unterschiedlich sein. Beispielsweise können auf der einen Flanke der Nut mehr einzelne Formvorsprünge vorgesehen sein als auf dem gegenüberliegenden Flankenbereich. Hierdurch lässt sich der gewünschte Verlauf und die Dicke der Schaumkonturraupe "steuern".

Vorzugsweise erstrecken sich der Formvorsprungquer zum Verlauf der Nut.

Ferner können die Formvorsprünge untereinander in einem zumindest im Wesentlichen gleichen Abstand zueinander angeordnet sein.

Die Erfindung gewährleistet es, dass der Formvorsprung jeweils in das Material des Akustik-Abdeckelements eingeformt sein also integraler Bestandteil sein kann.

Bei den Formvorsprüngen handelt es sich vorzugsweise um Noppen, Rippen oder Stege.

Die Schaumkonturraupe ist unverlierbar mit dem Abdeckelement verbunden. Vorzugsweise ist sie mit der Nut verklebt.

Das Abdeckelement einschließlich der Formvorsprünge kann als Druckguss, vorzugsweise auf Basis von Aluminium oder als Spritzgießteil, vorzugsweise aus Kunststoff, oder als laminiertes faserverstärktes Teil vorgesehen sein.

Bei der Schaumkonturraupe handelt es sich um im Applikationszustand fließfähiges, zähfließfähiges Material, welches nach dem Einbringen in die Nut aushärtet und gleichzeitig eine Verbindung mit dem Abdeckelement eingeht.

### Beschreibung der Erfindung anhand von Ausführunqsbeispielen

Nachstehend wird anhand eines Ausführungsbeispiels die vorliegende Erfindung näher erläutert. Es zeigen:
- Fig. 1: in stark vereinfachter schematischer Darstellungsweise ein Abdeckelement, welches im Bereich der Innenseite einer PKW-Tür befestigt ist;
- Fig. 2: einen vergrößerten Teilbereich des innenseitigen Randbereichs des Abdeckelements gemäß Fig. 1 in Draufsicht;
- Fig. 3: eine Schnittdarstellung des Abdeckelements im Bereich der Schnittlinie A-A von Fig. 2;
- Fig. 4: einen Teilbereich des Abdeckelements im Bereich der Kabeldurchführung in Teil-Schnittdarstellung sowie
- Fig. 5: einen Teilbereich des Abdeckelements mit Nut im Bereich der Ausbauchung unter Weglassung der Schaumkonturraupe in Draufsicht.

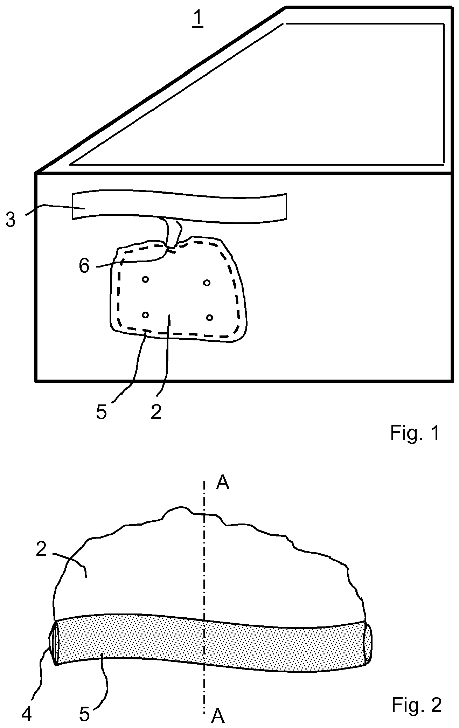

Fig. 1 zeigt mit der Bezugsziffer 1 den Innenbereich einer (unverkleideten) PKW-Tür mit einem an der Innenseite der PKW-Tür befestigten Abdeckelement 2 z. B. eines sogenannten Akustik-Abdeckelements. Das Abdeckelement 2 dient einerseits dazu, eine Nass-/Trockentrennung zu gewährleisten, zum anderen dient es auch der Versteifung des Türbereichs. Das Abdeckelement 2 kann alternativ ein Aggregatträger (AGT) sein. Als "Aggregatträger" wird ein mechanischer Träger für eine Funktionseinrichtung, beispielsweise für einen (nicht dargestellten) Fensterheber-Motor oder dergleichen, bezeichnet. Derartige Abdeckelemente 2 können als Druckguss- (z. B. Aluminium-Druckguss) oder Spritzgießteile (z. B. Kunststoff-Spritzgiessteile) und/oder als laminierte Fasermatten oder Einzelfaser- bzw. Faserbündel-verstärkte Teile konzipiert sein. Sie werden mittels z. B. Steckverbinder oder dgl. an der PKW-Tür fixiert.

Fig. 1 zeigt weiterhin einen Teil eines entlang der Innenseite der PKW-Tür verlaufenden Kabelbaums 3, in dem einzelne Kabel zusammengefasst sind. Aus dem Kabelbaum 3 wird ein Teil der Kabel abgezweigt und in den Bereich unterhalb des Abdeckelements 2 geführt. Dort kann sich z. B. ein Fensterheber-Motor oder eine andere elektrische oder elektronische Baueinheit befinden.

Um eine Nass-/Trockentrennung zu gewährleisten, besitzt das Abdeckelement 2 eine in Fig. 1 gestrichelt angedeutete, vollumlaufende Dichtungseinrichtung, die sich im montierten Zustand zwischen dem Grundkörper des Abdeckelements 2 und der Oberfläche der PKW-Tür 1 befindet und eine umlaufende Abdichtung gewährleistet.

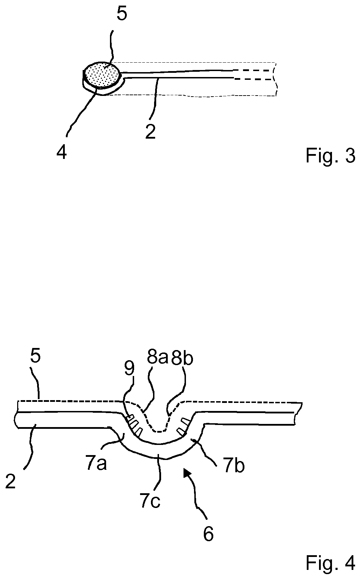

In den Fig. 2 und 3 ist diese Art der Abdichtung in vergrößerter Darstellung näher erläutert. Im äußeren Randbereich des Abdeckelements 2 ist eine längsverlaufende Nut 4 eingeformt, die dazu vorgesehen ist, eine Schaumkonturraupe 5 aufzunehmen. Die Schaumkonturraupe 5 wird üblicherweise in einem automatisierten Prozess in die Nut 4 eingebracht, wobei hierbei das Material der Schaumkonturraupe 5 flüssig ist und erst nachher verfestigt. Zudem wird eine Haft- oder Klebeverbindung mit dem Material des Abdeckelements 2 im Bereich der Nut 4 begründet. Die Schaumkonturraupe 5 besitzt, wie aus Fig. 3 ersichtlich, im Querschnitt betrachtet eine rundliche bzw. ovale Form. Die so eingebrachte Schaumkonturraupe 5 stellt somit einen integralen Bestandteil des Abdeckelements 2 dar. Das Abdeckelement 2 kann mit der Schaumkonturraupe 5 als integrierte Dichtung bereits vorkonfektioniert werden, wodurch Montagevorgänge einer Dichtung beim PKW-Hersteller entfallen. Das Material der Schaumkonturraupe 5 wird kontinuierlich in die Nut 4 durch eine sich entlang der Nut 4 bewegende (nicht dargestellte) Einspritzdüse aufgebracht.

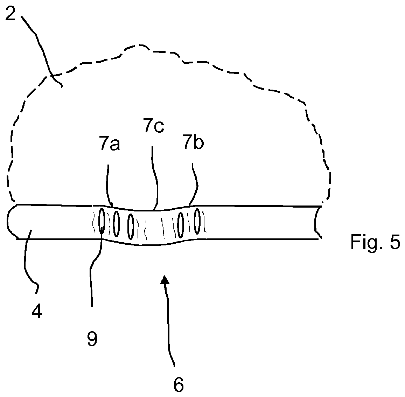

Im Bereich einer Kabeldurchführung, beispielsweise derart, wie sie in Fig. 1 dargestellt ist, bildet das Abdeckelement 2 für die Kabeldurchführung eine Ausbauchung 6, sodass die Nut 4 wie aus Fig. 4 ersichtlich über die Ausbauchung 6 hinweg verläuft. Im Bereich der Ausbauchung 6 sind in der Nut 4 mehrere vorzugsweise quer zum Verlauf der Nut 4 orientierte Formvorsprünge vorgesehen, die einen Widerstand auf das Fließverhalten des Schaums der Schaumkonturraupe 5 im noch flüssigen Zustand bewirken. So sind bei der in Fig. 4 gezeigten Ausgestaltung eine Mehrzahl von Formvorsprüngen in Form von Rippen 9 vorgesehen, die gemäß Fig. 5 quer zur Längserstreckung der Nut 4 verlaufen, und zwar in jedem Flankenbereich 7a, 7b der Ausbauchung 6. Im Bodenbereich der Ausbauchung 6 sind keine Formvorsprünge vorgesehen.

Die Formvorsprünge können im gleichen Abstand zueinander angeordnet sein. Bei Bedarf können auch an einem Flankenbereich, z.B. 7a, mehr Formvorsprünge vorgesehen sein als im gegenüberliegenden Flankenbereich 7b. Dies hängt mit der Orientierung des Eintrags des flüssigen oder zähflüssigen Schaums zusammen. Bei der in Fig. 4 dargestellten Ausgestaltung wird der Schaum in die Nut 4 von der rechten zur linken Seite eingebracht.

Aus Fig. 4 ist ersichtlich, wie sich die Schaumkonturraupe 5 aufgrund des Vorhandenseins der Formvorsprünge im Bereich der Ausbauchung 6 ausbildet. Die Formvorsprünge bewirken eine Verdickung 8a, 8b Schaumkonturraupe 5 im jeweiligen Randbereich 7a, 7b der Ausbauchung 6, wodurch eine optimale Abdichtung des Kabels im Bereich der Kabeldurchführung ermöglicht wird. Denn gerade in diesem Randbereich ist aufgrund der gegebenen Formen eine Abdichtung problematisch. Wird daher das erfindungsgemäße Abdeckelement 2 im Bereich der Ausbauchung 6 mit einer (in den Fig. nicht dargestellten) Kabeldurchführung installiert, so schmiegt sich die Schaumkonturraupe 5 im Seitenbereich der Kabeldurchführung optimal sowohl an die Kabeldurchführung als auch an die Fahrzeugtür 1 an und gewährleistet eine wirksame Abdichtung in diesem problematischen Bereich.

### BEZUGSZEICHENLISTE

- 1: PKW-Tür
- 2: Abdeckelement
- 3: Kabelbaum
- 4: Nut
- 5: Schaumkonturraupe
- 6: Ausbauchung
- 7a: Flankenbereich
- 7b: Flankenbereich
- 7c: Bodenbereich
- 8a: Verdickung
- 8b: Verdickung
- 9: Rippen

- AGT: Aggregatträger

## Patentansprüche

1. Abdeckelelement (2) zur Abdeckung von Fahrzeugteilen oder - bereichen, wobei das Abdeckelement (2) dazu hergerichtet ist, für
eine Nass-Trockenbereichstrennung eingesetzt zu werden, wobei
eine längliche Nut (4) für das Aufbringen eine Schaumkonturraupe (5), die entlang eines Teilbereichs des Umfangs, vorzugsweise entlang des gesamten Umfangs des Abdeckelelements (2)
vorgesehen ist, **dadurch gekennzeichnet, dass**
eine durch die Nut (4) und Schaumkonturraupe (5) gebildete Ausbauchung (6) vorgesehen ist, die als Kabeldurchführung dient, und
die Nut (4) im Bereich der Ausbauchung (6) mindestens einen Formvorsprung, vorzugsweise eine Mehrzahl von Formvorsprüngen aufweist.

2. Abdeckelelement (2) nach Anspruch 1, **dadurch gekennzeichnet, dass** der Formvorsprung derart geformt und/oder orientiert ist, dass das Fließen von flüssigem, zähflüssigem oder viskosem Schaum in Richtung des Verlaufs der Nut (4) verzögert wird.

3. Abdeckelelement (2) nach Anspruch 1 oder 2, **dadurch gekennzeichnet, dass** sich der Formvorsprung im Flankenbereich (7a, 7b) der Nut (4) befindet, wohingegen im Bodenbereich (7c) der Nut (4) keine Formvorsprungvorgesehen ist.

4. Abdeckelelement (2) nach mindestens einem der vorhergehenden Ansprüche, **dadurch gekennzeichnet, dass** im jeweiligen Flankenbereich (7a, 7b) der Nut (4) eine Verdickung (8a, 8b) der Schaumkonturraupe (5) vorgesehen ist.

5. Abdeckelelement (2) nach mindestens einem der vorhergehenden Ansprüche, **dadurch gekennzeichnet, dass** mehrere Formvorsprünge in Längsrichtung der Nut (4) betrachtet hintereinander angeordnet sind.

6. Abdeckelelement (2) nach mindestens einem der vorhergehenden Ansprüche, **dadurch gekennzeichnet, dass** der Formvorsprung sich quer zum Verlauf der Nut (4) erstreckt.

7. Abdeckelelement (2) nach mindestens einem der vorhergehenden Ansprüche, **dadurch gekennzeichnet, dass** die Formvorsprünge untereinander in einem zumindest im Wesentlichen gleichen Abstand zueinander angeordnet sind.

8. Abdeckelelement (2) nach mindestens einem der vorhergehenden Ansprüche, **dadurch gekennzeichnet, dass** der Formvorsprung in das Material des Akustik-Abdeckelelement (2) eingeformt ist.

9. Abdeckelelement (2) nach mindestens einem der vorhergehenden Ansprüche, **dadurch gekennzeichnet, dass** es sich bei den Formvorsprüngen um Rippen (9), Noppen oder Stege handelt.

10. Abdeckelelement (2) nach mindestens einem der vorhergehenden Ansprüche, **dadurch gekennzeichnet, dass** Schaumkonturraupe (5) mit der Nut (4) verklebt ist.

11. Abdeckelelement (2) nach mindestens einem der vorhergehenden Ansprüche, **dadurch gekennzeichnet, dass** das Abdeckelement (2) als Druckgussteil, Spritzgießteil, laminiertes Teil und/oder faserverstärktes Teil vorgesehen ist.

12. Abdeckelelement (2) nach mindestens einem der vorhergehenden Ansprüche, **dadurch gekennzeichnet, dass** das Abdeckelement (2) ein Akustik-Abdeckelement, ein Aggregatträger (AGT) oder ein Zwischenelement ist.

## Claims

1. Cover element (2) for covering vehicle parts or vehicle regions, wherein the cover element (2) is designed to be used for separating a wet and a dry region, with an elongate groove (4) for the application of a foam contour bead (5) which is provided along a partial region of the circumference, preferably along the entire circumference of the cover element (2), **characterized in that** a bulge (6) formed by the groove (4) and foam contour bead (5) is provided which serves as a cable lead through, and the groove (4) has at least one shaping projection, preferably a plurality of shaping projections, in the region of the bulge (6).

2. Cover element (2) according to Claim 1, **characterized in that** the shaping projection is shaped and/or oriented in such a manner that the flow of liquid, semiliquid or viscous foam in the direction of the course of the groove (4) is delayed.

3. Cover element (2) according to Claim 1 or 2, **characterized in that** the shaping projection is located in the flank region (7a, 7b) of the groove (4) whereas no shaping projection is provided in the base region (7c) of the groove (4).

4. Cover element (2) according to at least one of the preceding claims, **characterized in that** a thickened portion (8a, 8b) of the foam contour bead (5) is provided in the respective flank region (7a, 7b) of the groove (4).

5. Cover element (2) according to at least one of the preceding claims, **characterized in that** a plurality of shaping projections are arranged one behind another, as viewed in the longitudinal direction of the groove (4).

6. Cover element (2) according to at least one of the preceding claims, **characterized in that** the shaping projection extends transversely with respect to the course of the groove (4).

7. Cover element (2) according to at least one of the preceding claims, **characterized in that** the shaping projections are arranged among one another at an at least substantially identical distance to one another.

8. Cover element (2) according to at least one of the preceding claims, **characterized in that** the shaping projection is moulded into the material of the acoustic cover element (2).

9. Cover element (2) according to at least one of the preceding claims, **characterized in that** the shaping projections are ribs (9), pimples or webs.

10. Cover element (2) according to at least one of the preceding claims, **characterized in that** the foam contour bead (5) is adhesively bonded to the groove (4) .

11. Cover element (2) according to at least one of the preceding claims, **characterized in that** the cover element (2) is provided as a diecast part, injection-moulded part, laminated part and/or fibre-reinforced part.

12. Cover element (2) according to at least one of the preceding claims, **characterized in that** the cover element (2) is an acoustic cover element, an assembly carrier (AGT) or an intermediate element.

## Revendications

1. Élément de recouvrement (2) pour le recouvrement de pièces ou de zones de véhicules, l'élément de recouvrement (2) étant conçu pour être utilisé pour une séparation de zones humides-sèches,
une rainure longitudinale (4) pour l'application d'une chenille de contour en mousse (5) étant prévue le long d'une zone partielle de la périphérie, de préférence le long de l'ensemble de la périphérie de l'élément de recouvrement (2), **caractérisé en ce que**
un renflement (6) formé par la rainure (4) et la chenille de contour en mousse (5) est prévu, qui sert de passage de câbles, et
la rainure (4) présente au moins une saillie de forme, de préférence une pluralité de saillies de forme, dans la zone du renflement (6).

2. Élément de recouvrement (2) selon la revendication 1, **caractérisé en ce que** la saillie de forme est formée et/ou orientée de telle sorte que l'écoulement de mousse liquide, épaisse ou visqueuse dans la direction du parcours de la rainure (4) soit ralenti.

3. Élément de recouvrement (2) selon la revendication 1 ou 2, **caractérisé en ce que** la saillie de forme se trouve dans la zone de flanc (7a, 7b) de la rainure (4), tandis qu'aucune saillie de forme n'est prévue dans la zone de fond (7c) de la rainure (4).

4. Élément de recouvrement (2) selon au moins l'une quelconque des revendications précédentes, **caractérisé en ce qu'un** épaississement (8a, 8b) de la chenille de contour en mousse (5) est prévu dans la zone de flanc respective (7a, 7b) de la rainure (4).

5. Élément de recouvrement (2) selon au moins l'une quelconque des revendications précédentes, **caractérisé en ce que** plusieurs saillies de forme sont agencées les unes après les autres dans la direction longitudinale de la rainure (4).

6. Élément de recouvrement (2) selon au moins l'une quelconque des revendications précédentes, **caractérisé en ce que** la saillie de forme s'étend perpendiculairement au parcours de la rainure (4).

7. Élément de recouvrement (2) selon au moins l'une quelconque des revendications précédentes, **caractérisé en ce que** les saillies de forme sont agencées les unes par rapport aux autres avec un écart au moins essentiellement identique les unes des autres.

8. Élément de recouvrement (2) selon au moins l'une quelconque des revendications précédentes, **caractérisé en ce que** la saillie de forme est formée dans le matériau de l'élément de recouvrement acoustique (2).

9. Élément de recouvrement (2) selon au moins l'une quelconque des revendications précédentes, **caractérisé en ce que** les saillies de forme consistent en des nervures (9), des picots ou des traverses.

10. Élément de recouvrement (2) selon au moins l'une quelconque des revendications précédentes, **caractérisé en ce que** la chenille de contour en mousse (5) est collée avec la rainure (4).

11. Élément de recouvrement (2) selon au moins l'une quelconque des revendications précédentes, **caractérisé en ce que** l'élément de recouvrement (2) est prévu sous la forme d'une pièce coulée sous pression, d'une pièce moulée par injection, d'une pièce stratifiée et/ou d'une pièce renforcée par des fibres.

12. Élément de recouvrement (2) selon au moins l'une quelconque des revendications précédentes, **caractérisé en ce que** l'élément de recouvrement (2) est un élément de recouvrement acoustique, un support de groupe (AGT) ou un élément intermédiaire.
